# EUROPEAN PATENT APPLICATION

(11) **EP 4 760 007 A1**
(43) Date of publication of application: **17.06.2026**
(21) Application number: 25223619.5
(22) Date of filing: 15.12.2025
(51) Int. Cl.: E02F 9/20, B60K 35/10, G05G 1/01

(54) **WORKING MACHINE AND METHOD OF OPERATING A WORKING MACHINE**

(30) Priority: 16.12.2024 GB 202418452
(71) Applicant: J.C. Bamford Excavators Limited, Uttoxeter Staffordshire ST14 5JP (GB)
(72) Inventor: WILCOX, Ben, Uttoxeter, ST14 5JP (GB); MOTTERSHEAD, Sam, Uttoxeter, ST14 5JP (GB); GRAHAM, David, Uttoxeter, ST14 5JP (GB)
(74) Representative: Foot, Paul Matthew James

(57) **Abstract**

A working machine, comprising: a ground-engaging propulsion arrangement; a body mounted to the ground-engaging propulsion arrangement, the body comprising an operator station; a plurality of assignable controllable elements; a configurable foot pedal in the operator station for controlling a selected one of the assignable controllable elements; an input device arrangement; and a controller in communication with the configurable foot pedal and the input device arrangement. The controller is configured to: receive a selection input from the input device arrangement; assign any one of the assignable controllable elements for control by the configurable foot pedal based on the selection input received from the input device arrangement; receive a control input from the configurable foot pedal; and control the assigned controllable element based on the control input received from the configurable foot pedal.

## Description

### FIELD

The present teachings relate to a working machine, and in particular to a working machine including a foot pedal for controlling a controllable element of the working machine.

### BACKGROUND

Off-highway vehicles or working machines are for example those used in construction or agricultural industries configured to transport loads over a surface (e.g. backhoe loaders, slew excavators, telescopic handlers, forklifts, skid-steer loaders. One such working machine is a wheeled excavator, which is typically used for soil-shifting operations (e.g. trenching, grading, and loading) and materials handling (e.g. depositing aggregate in trenches, lifting materials and placing them on an elevated platform).

Working machines typically include multiple controllable elements, such as hydraulic actuators, configured to move different parts of the machine, such as a working arm, a work implement mounted to the working arm, a dozer blade and a tow hitch for example. These controllable elements are typically controlled via hand-operated control input devices, such as joysticks and joystick-mounted roller switches, located in an operator cab of the working machine.

In recent years, working machines have included a growing number of controllable tools and attachments, leading to an increase in the total number of controllable elements on the machine. This has tended to increase the workload on the operator's hands required to simultaneously control the working machine's controllable elements, which can result in operator discomfort when working for long periods of time. Moreover, an increased number of controllable elements may cause confusion regarding which hand-operated control input device controls which controllable element.

The present teachings seek to overcome or at least mitigate one or more problems associated with the prior art.

### SUMMARY

The present invention provides a working machine, and a method for operating a working machine, according to the appended claims.

A first aspect of the teachings provides a working machine. The working machine may comprise a ground-engaging propulsion arrangement. The working machine may comprise a body mounted to the ground-engaging propulsion arrangement. The body may comprise an operator station. The working machine may comprise a plurality of assignable controllable elements. The working machine may comprise a configurable foot pedal in the operator station for controlling a selected one of the assignable controllable elements. The working machine may comprise an input device arrangement. The working machine may comprise a controller in communication with the configurable foot pedal and the input device arrangement. The controller may be configured to receive a selection input from the input device arrangement. The controller may be configured to assign any one of the assignable controllable elements for control by the configurable foot pedal based on the selection input received from the input device arrangement. The controller may be configured to receive a control input from the configurable foot pedal. The controller may be configured to control the assigned controllable element based on the control input received from the configurable foot pedal.

Providing the configurable foot pedal enables the operator to use one of their feet to operate a suitable controllable element of their choice. This allows the operator to control more of the working machine's controllable elements simultaneously (i.e. with their feet and hands), improving their working efficiency. Moreover, this helps to reduce the workload on the operator's hands when operating the working machine for long periods of time, enhancing operator comfort.

Further, since the foot pedal is configurable, e.g. as opposed to a foot pedal with a fixed control function, the operator can assign a control function to the foot pedal in line with their control preference, improving their comfort and work efficiency. Moreover, being configurable, it is more likely that the foot pedal will be used during operation of the working machine since regardless of the job being carried out by the machine (e.g. excavating, loading, travelling, towing etc), the foot pedal can be assigned a relevant control function. As such, the foot pedal is less likely to be redundant.

The working machine may comprise a display device in the operator station in communication with the controller. The display device may be configured to display an output from the controller indicative of the assignable controllable elements assignable to the configurable foot pedal.

Advantageously, such a configuration may make it easier for the operator to determine which controllable elements of the machine are assignable to the foot pedal.

The display device may be configured to display an output from the controller based on the selection input received from the input device arrangement.

Advantageously, such a configuration provides feedback to the operator based on their selection, which may make it easier for the operator to assign the controllable element they want to be controlled by the configurable foot pedal.

The input device arrangement may comprise a touchscreen device comprising the display device.

Advantageously, such a configuration may make it easier for the operator to assign the controllable element they want to be controlled by the configurable foot pedal.

The working machine may be configured such that the controllable element assigned for control by the configurable foot pedal is selectable via a pointing device gesture, such as a drag and drop function, displayed on the display device.

Advantageously, such a configuration may make it easier for the operator to assign the controllable element they want to be controlled by the configurable foot pedal.

The input device arrangement may be in the operator station.

Advantageously, such a configuration makes it easier for the operator in the operator station to assign the controllable element to be controlled by the configurable foot pedal.

The input device arrangement may comprise one or more of: a touchscreen device; a switch, e.g. a rotary switch or dial; a button; a mouse; and a joystick.

Each of the assignable controllable elements may be controllable by the configurable foot pedal to produce a continuous control output.

The controller may be configured to inhibit any discrete output controllable element of the working machine being selected for control by the configurable foot pedal.

The controller may be configured such that the control output of the assigned controllable element is proportional to a displacement of the configurable foot pedal from a rest position of the configurable foot pedal.

Advantageously, such a configuration helps to simplify control of the assigned controllable element via the configurable foot pedal.

The assignable controllable elements may include one or more actuators (e.g. hydraulic actuators).

The working machine may further comprise a working arm pivotally mounted to the body. One or more of the assignable controllable elements may be configured to control movement of: the working arm; a work implement mounted to the working arm; and/or a device configured to move a work implement relative to the working arm.

The working arm may comprise a triple articulated boom comprising a first boom section pivotally mounted to the body, a second boom section pivotally mounted to the first boom section, and a third boom section pivotally mounted to the second boom section. One or more of the assignable controllable elements may be configured to control pivoting of the first, second and/or third boom sections relative to the machine body, first boom section and second boom section respectively.

The working machine may further comprise a working arm pivotally mounted to the body, and a work implement mounted to an end of the working arm. The work implement may comprise two or more relatively movable parts. At least one of the assignable controllable elements may be configured to control relative movement of said parts. E.g. the work implement may be a grab, a hammer, or a rotary planer drum or brush.

One or more of the assignable controllable elements may be configured to control: movement of a dozer blade relative to the body; movement of a stabiliser leg relative to the body; an actuatable tow hitch relative to the body; a trailer auxiliary service and/or a trailer tip service.

The plurality of assignable controllable elements may include three or more, optionally, four or more, e.g. five or more, controllable elements.

Advantageously, such a configuration enables the configurable foot pedal to be used to control more components of the working machine.

The control input received from the configurable foot pedal may correspond to a displacement of the configurable foot pedal from a rest position thereof. The controller may be configured to vary a mapping between a control output of the selected controllable element and the position of the configurable foot pedal relative to its rest position based on an input received from the input device arrangement.

Advantageously, such a configuration enables the sensitivity of the control output of the controllable element to the operation of the configurable foot pedal to be varied according to the operator's preference.

The configurable foot pedal may be pivotable about an axis thereof in a first direction between the rest position and a first maximum pivot position. The controller may be configured such that the control output of the selected controllable element is proportional to the displacement of the configurable foot pedal from its rest position. The controller may be configured to vary the control output of the selected controllable element corresponding to the first maximum pivot position of the configurable foot pedal based on an input received from the input device arrangement.

Advantageously, such a configuration enables the sensitivity of the control output of the controllable element to the operation of the configurable foot pedal to be varied according to the operator's preference.

The configurable foot pedal may be a bi-directional foot pedal.

The configurable foot pedal may be pivotable about the axis thereof in a second direction opposite to the first direction between the rest position and a second maximum pivot position. The controller may be configured to vary the control output of the selected controllable element corresponding to the second maximum pivot position of the configurable foot pedal based on an input received from the input device arrangement.

Advantageously, such a configuration enables the sensitivity of the control output of the controllable element to the operation of the configurable foot pedal to be varied according to the operator's preference.

The working machine may further comprise a steering wheel mounted to a steering pedestal in the operator station. The configurable foot pedal may be adjacent the steering pedestal.

Advantageously, such a position of the configurable foot pedal may make it easier for the operator to operate the configurable foot pedal when operating the working machine.

The working machine may further comprise a prime mover speed control pedal (e.g. a throttle pedal) and/or a brake pedal in the operator station, separate to the configurable foot pedal.

The operator station may include no foot pedals other than the configurable foot pedal, and the prime mover speed control pedal and/or brake pedal.

Advantageously, such a configuration helps to maximise available floor space in the operator station.

The working machine may comprise a plurality of control input devices including the configurable foot pedal. The controller may be configured such that at least one of the assignable controllable elements is assignable to each control input device for control thereby based on a selection input received from the input device arrangement.

Advantageously, such a configuration provides the operator with greater flexibility to how they can control the working machine, further enhancing their comfort and work efficiency.

The plurality of control input devices may comprise one or more hand-operated control input devices in the operator station.

Advantageously, such a configuration provides the operator with greater flexibility to how they can control the working machine, further enhancing their comfort and work efficiency.

The controller may be configured such that at least one of the assignable controllable elements is selectively assignable to the configurable foot pedal and at least one hand operated control input device.

The one or more hand-operated control input devices may comprise a joystick and/or a switch (e.g. mounted to a joystick).

The controller may be configured to assign any two of the assignable controllable elements for simultaneous control by the configurable foot pedal based on a selection input received from the input device arrangement. The controller may be configured to control a first of the two assigned controllable elements based on a first control input received from the configurable foot pedal. The controller may be configured to simultaneously control a second of the two assigned controllable elements based on a second control input received from the configurable foot pedal.

Advantageously, such a configuration enables the configurable foot pedal to be used to control more components of the working machine simultaneously.

The configurable foot pedal may be configured to move about or along first and second axes thereof to generate the first and second control inputs respectively.

Advantageously, such a configuration enables the configurable foot pedal to be used to control more components of the working machine in a simplified manner.

The working machine may further comprise a storage device. The controller may be configured to store data corresponding to the assigned controllable element and a linked operator identifier in the storage device. The controller may be configured to retrieve the data corresponding to the assigned controllable element from the storage device based on an input received from the input device arrangement corresponding to the operator identifier.

Advantageously, such a configuration enables the preferences of different operators to be stored so as to minimise the time needed for each operator to configure the configurable foot pedal to their preference each time they use the machine.

The working machine may be an excavator, e.g. a wheeled excavator.

A second aspect of the teachings provides a method for operating a working machine. The working machine may comprise a ground-engaging propulsion arrangement. The working machine may comprise a body mounted to the ground-engaging propulsion arrangement. The body may comprise an operator station. The working machine may comprise a plurality of assignable controllable elements. The working machine may comprise a configurable foot pedal in the operator station for controlling a selected one of the assignable controllable elements. The working machine may comprise an input device arrangement. The method may comprise assigning any one of the assignable controllable elements for control by the configurable foot pedal based on a selection input received from the input device arrangement. The method may comprise controlling the assigned controllable element based on a control input received from the configurable foot pedal.

The controllable element assigned for control by the configurable foot pedal may be selected via a pointing device gesture, such as a drag and drop function, displayed on a display device, e.g. in the operator station.

### BRIEF DESCRIPTION OF DRAWINGS

Embodiments will now be described by way of example only with reference to the accompanying figures, in which:
Figure 1 is a side view of a working machine according to an embodiment;
Figure 2 is an isometric view of an interior of an operator station of the working machine of Figure 1;
Figure 3 is a diagram of a control system of the working machine of Figure 1;
Figure 4 is a flow diagram of a method for operating the working machine of Figure 1 according to an embodiment;
Figures 5 to 6c, 8a and 8b are exemplary screenshots of a display in the operator station of the working machine of Figure 1; and
Figure 7 is a flow diagram of a method for operating the working machine of Figure 1 according to an embodiment.

### DETAILED DESCRIPTION

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

References to vertical and horizontal in the present disclosure should be understood to be in relation to the machine when stood on horizontal ground in a non-working condition. The term axial is generally used in relation to the longitudinal axis of the machine. The term width is generally used in relation to the longitudinal length, that is, transverse to the length.

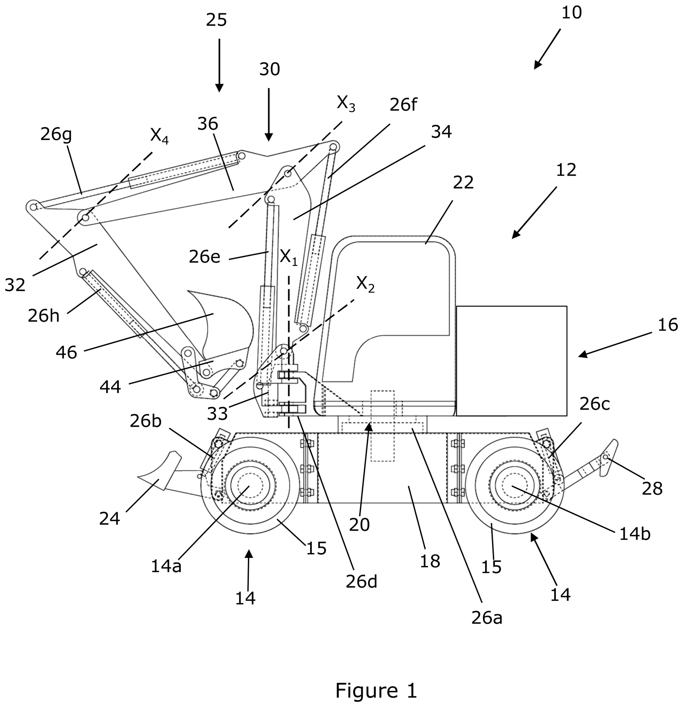

With reference to Figure 1, there is shown a working machine 10. In the present embodiment, the working machine 10 is an excavator. In other embodiments (not shown), the working machine 10 may instead be, for example, a backhoe loader, a telescopic handler, a forklift truck, a wheeled loading shovel, a dumper, or a tractor. Such working machines are suitable for use in off-highway industries such as agriculture and construction. In these industries they are generally configured to perform tasks such as excavation, load handling, harvesting or planting crops.

The working machine 10 includes a body 12 mounted to a ground-engaging propulsion arrangement 14.

In the illustrated embodiment, the body 12 includes a superstructure 16 pivotably mounted to an undercarriage 18 via a slewing mechanism 20. The slewing mechanism 20 enables the superstructure 16 to pivot relative to the undercarriage 18 about a substantially vertical axis without restriction. The slewing mechanism 20 includes a first actuator 26a configured to rotate (swing/slew) the superstructure 16 relative to the undercarriage 18 about a vertical axis of the machine. In alternative embodiments (not shown), the body 12 may not include such a slewing capability.

The undercarriage 18 is mounted to, and supported upon, the ground-engaging propulsion arrangement 14. In this embodiment, the ground-engaging propulsion arrangement 14 includes front and rear drive axles 14a, 14b, and a pair of wheels 15 mounted to each axle 14a, 14b. The terms 'front' and 'rear' are used with respect to a fore-aft axis of the working machine 10. In alternative embodiments (not shown), the ground-engaging propulsion arrangement 14 may instead include a pair of endless tracks.

The working machine 10 includes a drive arrangement (not shown) configured to provide motive power to the ground-engaging propulsion arrangement 14. For example, the drive arrangement may include a prime mover, such as an internal combustion engine or electric motor, configured to drive the ground-engaging propulsion arrangement 14 via a transmission.

In this embodiment, a dozer blade 24 is pivotally mounted to a front of the undercarriage 18. The dozer blade 24 may be raised and lowered by a second actuator 26b. The dozer blade 24 acts as a stabiliser for the working machine 10, by lifting the adjacent wheels 15 off the ground when excavating. In alternative embodiments, the dozer blade 24 may be mounted elsewhere on the working machine 10, e.g. a rear of the undercarriage 18.

In this embodiment, a pair of stabiliser legs 28 are pivotally mounted to a rear of the undercarriage 18, only one of which is visible in the view shown in Figure 1. The stabiliser legs 28 may be raised and lowered by a pair of third actuators 26c. The stabiliser legs 28 may act as a stabiliser for the working machine 10 when deployed in a similar manner to the dozer blade 24. In alternative embodiments, the stabiliser legs 28 may be mounted elsewhere on the working machine 10. For example, the stabiliser legs 28 may be mounted to opposing sides of the undercarriage 18 extending between the front and rear of the undercarriage 18.

A working arm arrangement 25 is pivotably mounted to the superstructure 16. The working arm arrangement 25 of the present embodiment is an excavator arm arrangement. Alternatively, the working arm arrangement 25 may instead be an inclinable telescopic arm arrangement, or a loader arm arrangement, for example.

In this embodiment, the working arm arrangement 25 includes a triple articulated boom 30 pivotally connected to a dipper 32. The triple articulated boom 30 is mounted to the superstructure 16 via a king post arrangement 33, which permits rotation of the boom 30 relative to the superstructure 16 about a generally vertical axis X1 and about a generally horizontal axis X2. A fourth actuator 26d is provided to rotate (swing/slew) the boom 30 about the vertical axis X1 relative to the superstructure 16 via the king post arrangement 33. In alternative embodiments (not shown), the boom 30 may instead be mounted to the superstructure 16 so as not to be pivotable relative thereto about the vertical axis X1.

The triple articulated boom 30 includes a first section 34 pivotally mounted to a second section 36. A fifth actuator 26e is provided to pivot (i.e. raise and lower) the first section 34 of the boom 30 relative to the superstructure 16 about the generally lateral horizontal X2. A sixth actuator 26f is provided to pivot the second section 36 of the boom 30 relative to the first section 34 about a generally horizontal axis X3.

The dipper 32 is pivotally mounted to the second section 36 of the boom 30. A seventh actuator 26g is provided to pivot the dipper 32 relative to the second section 36 about a generally horizontal axis X4.

In alternative embodiments (not shown), the boom 30 may not be triple articulated, and instead may include a single rigid section pivotably connected to the superstructure 16 and the dipper 32.

A mount 44 is provided to pivotally mount a work implement 46 to a distal end of the dipper 32. In the present embodiment, the work implement 46 is a bucket, but may be any suitable attachment in alternative embodiments, e.g. a pair of forks, or an actuatable work implement, such as a grab or a (e.g. hydraulic or pneumatic) hammer. An eighth actuator 26h is provided to move the work implement 46 relative to the dipper 32. In the illustrated embodiment, the eighth actuator 26h is configured to pivot the work implement 46 relative to the dipper 32 about a generally horizontal axis.

By 'actuatable work implement' it is intended to mean that the work implement includes two or more relatively movable parts. For example, a grab including two relatively movable jaws, a hammer including a striking part movable relative to a base, or a rotary planer drum or brush driven by a hydraulic motor.

Alternative boom actuator arrangements (e.g. twin actuators) may be utilised in other embodiments.

In the illustrated embodiment, the first to the eighth actuators 26a-26h are hydraulic actuators operated via a hydraulic control system of the working machine 10 including a hydraulic pump driven by the prime mover. The flow of pressurised hydraulic fluid supplied to each actuator 26a-26h is controlled via an arrangement of electrically controlled valves (not shown); i.e. valves controlled via an electric signal. For example, each valve may be operated via a solenoid or similar device. This enables each actuator 26a-26h to be controlled via an electric signal output from a controller, as opposed to via a mechanical linkage or a hydraulic pilot pressure, for example.

In alternative embodiments, one or more of the actuators 26a-26h may be electric actuators (e.g. including an electric motor).

In the illustrated embodiment, the hydraulic control system is configured to control a number of additional hydraulic elements of the working machine 10, including: a high flow auxiliary service; a low flow auxiliary service; a device, such as a tiltrotator, configured to move the work implement 46 relative to the dipper 32; a trailer auxiliary service; and a trailer tip service. The high and low flow auxiliary services may control an actuatable work implement 46, such as a grab or hammer, e.g. control relative movement of the two or more relatively movable parts of the actuatable work implement. In alternative embodiments, one or more of the foregoing hydraulic elements may instead be electric elements (e.g. moved via an electric motor).

The working machine 10 includes a plurality of assignable controllable elements. By 'controllable element' it is intended to mean any component of the working machine 10 which is capable of being controlled via a control input received from the operator. By 'assignable' controllable element it is intended to mean that the controllable element can be selectively assigned to a control input device of the working machine 10 for control thereby, as discussed more in the following.

In the illustrated embodiment, the machine's assignable controllable elements include (e.g. only) the second actuator 26b for controlling the dozer blade 24, the third actuators 26c for controlling the stabiliser legs 28, the sixth actuator 26f for pivoting the second section 36 of the boom 30 relative to the first section 34, the high and low flow auxiliary services, the device, such as a tiltrotator, configured to move (e.g. rotate) the work implement 46 relative to the dipper 32, the trailer auxiliary service, and the trailer tip service. In alternative embodiments, the working machine 10 may include additional or alternative assignable controllable elements. In some embodiments, all of the first to the eighth actuators 26a-26h may be assignable controllable elements.

The superstructure 16 includes an operator station 22 in the form of an enclosed cab from which an operator can control one or more of the controllable elements of the working machine 10. In other embodiments, the operator station 22 may be at least partially open.

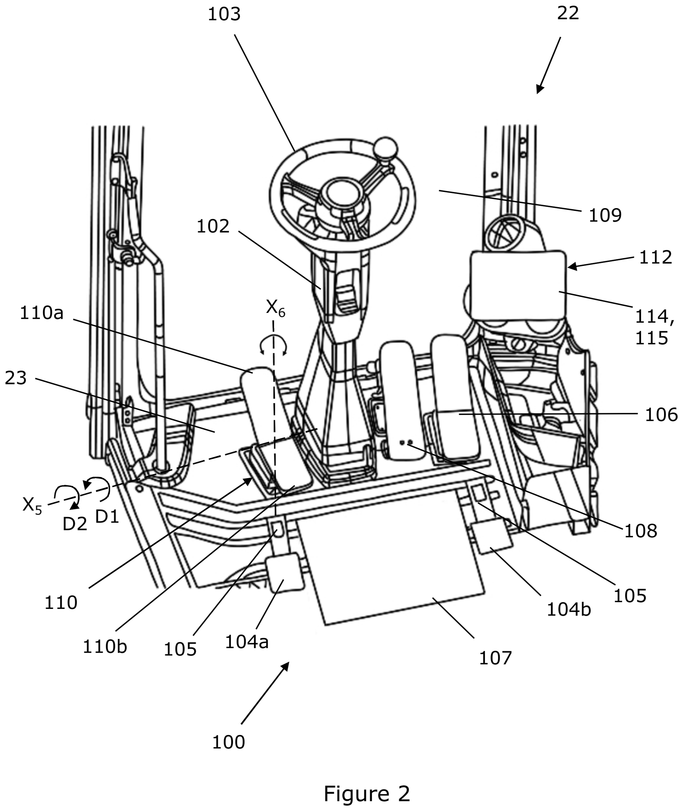

With reference to Figure 2, the operator station 22 houses a plurality of configurable control input devices 100, a steering wheel 103, a prime mover speed control pedal (hereinafter referred to as a throttle pedal) 106, a brake pedal 108, and an operator seat 107 (represented schematically in Figure 2).

The steering wheel 103 controls steering of the wheels 15 mounted to the front and/or rear axles 14a, 14b of the ground-engaging propulsion arrangement 14 via a steering linkage (not shown). The steering wheel 103 is supported on a steering pedestal 102, which in this embodiment houses a steering column of the steering linkage. In alternative embodiments, the working machine 10 may include a steer-by-wire type arrangement in which the steering wheel 103 is not mechanically connected to the steered wheels 15, and in which the pedestal 102 does not house a steering column.

The throttle pedal 106 is configured to control the drive arrangement of the working machine 10 in a known manner. The brake pedal 108 is configured to control a braking system of the working machine 10 in a known manner. The throttle pedal 106 and the brake pedal 108 are secured to a floor 23 of the operator station 22 and located adjacent to each other and adjacent to the steering pedestal 102. The throttle pedal 106 and brake pedal 108 are both located to the right-hand side of the steering pedestal 102 so as to be operable by the right foot of the operator seated in the operator seat 107.

Each configurable control input device 100 is suited to selectively controlling more than one of the assignable controllable elements. In the illustrated embodiment, the configurable control input devices 100 include hand-operated control input devices including left and right joysticks 104a, 104b, and a plurality of digit-operable switches 105 mounted to each joystick 104a, 104b. In alternative embodiments, the configurable control input devices 100 may include additional and/or alternative hand-operated control input devices, such as one or more levers for example.

The terms 'left' and 'right' are used with respect to an operator seated in the operator seat 107 and facing a front windscreen 109 of the operation station 22. The left and right joysticks 104a, 104b are positioned to the left and right of the operator seat 107, such that an operator seated in the operator seat 107 and facing the front windscreen 109 can comfortably manipulate the left and right joysticks 104a, 104b with their left and right hands respectively. In some embodiments, the joysticks 104a, 104b may be mounted to the seat 107.

The digit-operable switches 105 may include one or more rotary switches, such as a roller switch, one or more rocker switches, and one or more pushbuttons. In alternative embodiments, one or more other digit-operable input devices may be mounted to one or both joysticks 104a, 104b, such as one or more tactile sensors, for example. The digit-operable switches 105 are arranged on each joystick 104a, 104b so as to be manipulable via at least one digit (e.g. finger or thumb) of the hand of the operator gripping that joystick 104a, 104b.

To simultaneously control the large number of controllable elements of the working machine 10, a solution would be to increase the number of hand-operated control input devices (e.g. joysticks and/or digit-operable switches) in the operator station 22. However, this can make it more difficult for the operator to remember the function performed by each hand-operated control input device. There is also a limit to how many digit-operable switches can practically be mounted to each joystick, and a limit to how may digit-operable switches an operator can manipulate simultaneously with their hands.

An alternative approach could be to include one or more additional foot pedals in the operator station 22, in addition to throttle and brake pedals 106, 108, each dedicated to controlling a single controllable element of the working machine 10.

The present inventors recognise that a foot pedal typically requires a large amount of floor space relative to a hand-operated control input device, so having multiple foot pedals within the operator station 22 reduces the floor space available in the operator station 22 for the operator to walk on. Moreover, since many of the working machine's controllable elements may not be used simultaneously, one or more of the additional foot pedals may be redundant for significant periods of time.

Therefore, to at least alleviate these problems, the configurable control input devices 100 of the working machine 10 include a configurable foot pedal 110 - a foot pedal that may be configured to control a selected one of a plurality of different control functions. In the following this shall be referred to as 'the foot pedal 110'. The foot pedal 110 is secured to the floor 23 of the operator station 22. The foot pedal 110 can selectively control more than one of the assignable controllable elements, and so is less likely to redundantly take up floor space in the operator station 22.

The foot pedal 110 is located adjacent to the steering pedestal 102. In the illustrated embodiment, the foot pedal 110 is located to the left-hand side of the steering pedestal 102 so as to be operable via the left foot of an operator seated in the operator seat 107.

In alternative embodiments (not shown), the throttle pedal 106, brake pedal 108 and the foot pedal 110 may have any suitable arrangement in the operator station 22.

The operator station 22 further includes an input device arrangement 112 for receiving an input from the operator. In the illustrated embodiment, the input device arrangement 112 includes a touch screen device 114. The touch screen device 114 includes a display device 115 with a screen. The touch screen device 114 is configured such that touching of the screen by the operator provides an input to the input device arrangement 112.

In alternative embodiments (not shown), the input device arrangement 112 may additionally or alternatively include one or more other input devices, such as one or more manual input devices (e.g. one or more buttons, switches, dials, tactile sensors, joysticks, keyboards, a mouse) and/or one or more voice-operated input devices. In such embodiments, the display device 115 may be provided separate to the input device arrangement 112.

In the illustrated embodiment, the input device arrangement 112 is wholly located within the operator station 22. In alternative embodiments (not shown) the input device arrangement 112 may be instead at least partially located outside the operator station 22. Locating the input device arrangement 112 at least partially within the operator station 22 makes it easier for the operator seated in the operator station 22 to selectively assign the assignable controllable element to be controlled by the configurable control input devices 100, as will be discussed more in the following.

The display device 115 is configured to display an output based on the selection input received from the input device arrangement 112. This makes it easier for the operator to select the assignable controllable element they want to be controlled by the configurable control input devices 100.

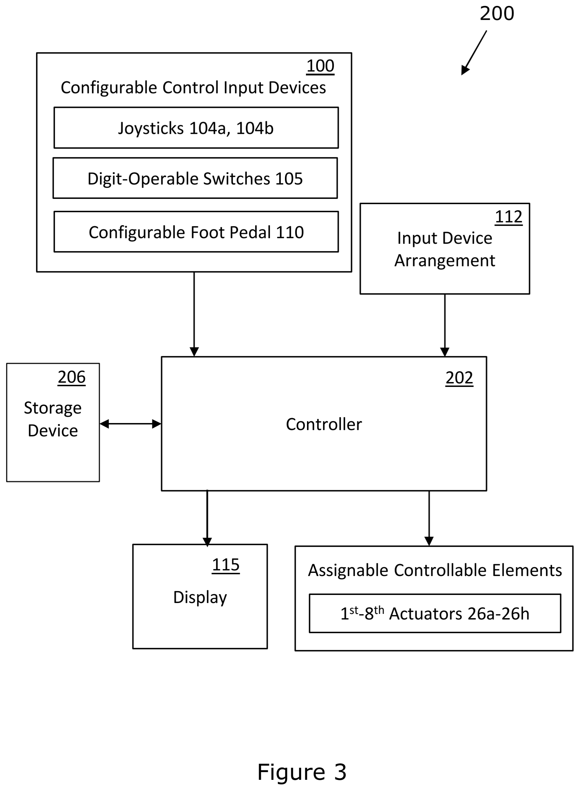

With reference to Figure 3, the working machine 10 includes a control system 200 for controlling the working machine's assignable controllable elements. The control system 200 includes a controller 202 in communication with the configurable control input devices 100, the input device arrangement 112, the display 115 and the assignable controllable elements. The controller 202 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU), to perform the described methods. The controller may include an associated memory or the memory may be located locally to the controller or remotely. The memory may be a non-volatile flash memory.

In the illustrated embodiment, the controller 202 controls the hydraulic actuators 26a-26h via control of the valve arrangement of the working machine's hydraulic control system.

For each configurable control input device 100, the controller 202 is configured to assign at least one of the assignable controllable elements for control by that control input device 100 based on a selection input received from the input device arrangement 112. The controller 202 is further configured to control the assigned controllable element based on a control input received from that control input device 100.

Such a configuration of the control system 200 enables each configurable control input device 100 to control different assignable controllable elements of the working machine 10, depending on the preferences of the operator. This helps to improve the operator's comfort and enables the operator to work more efficiently.

Providing the foot pedal 110 is especially advantageous since it enables the operator to use one of their feet to operate a controllable element of their choice. This allows the operator to control more of the working machine's controllable elements simultaneously (i.e. with their feet and hands), improving their working efficiency. Moreover, this helps to reduce the workload on the operator's hands when operating the working machine 10 for long periods of time, helping to reduce operator discomfort and risk of injury.

Since the foot pedal 110 is configurable, as opposed to a foot pedal with a fixed control function, the operator can assign a control function to the foot pedal 110 in line with their control preference, or depending upon a particular task they are undertaking, improving the comfort of the operator. Moreover, being configurable, it is more likely that the foot pedal 110 will be used during operation of the working machine 10 since regardless of the job being carried out (e.g. excavating, loading, travelling, towing etc), the foot pedal 110 can be assigned a relevant control function. As such, the foot pedal 110 is less likely to be redundant.

Each joystick 104a, 104b is movable about two orthogonal axes thereof so as to control two different assignable controllable elements of the working machine 10. The joysticks 104a, 104b may be configured to control assignable controllable elements associated with the working arm arrangement 25 and/or the slewing mechanism 20. In the illustrated embodiment, each joystick 104a, 104b controls two of the following assignable controllable elements via one of a plurality of assignable control patterns (e.g. ISO or SAE control patterns): the first actuator 26a to rotate the superstructure 16 relative to the undercarriage 18, the fifth actuator 26e to pivot the first section 34 of the boom 30 relative to the superstructure 16, the seventh actuator 26g to pivot the dipper 32 relative to the second section 36 of the boom 30, and the eighth actuator 26h to pivot the work implement 46 relative to the dipper 32. In alternative embodiments, additional and/or alternative assignable controllable elements may be assignable to one or both of the joysticks 104a, 104b.

The foot pedal 110 may only be assigned controllable elements that are controllable so as to move relative to part of the working machine 10. For example, the foot pedal 110 may be assigned to control: one or more of the actuators 26a-26h (e.g. not controlled by the joysticks 26a-26h), such as the second, third and/or sixth actuators 26b, 26c, 26f; movement of an actuatable tow hitch relative to the body 12; an actuatable work implement 46 (e.g. control relative movement of two or more relatively movable parts of such a work implement), e.g. via the high and/or low flow auxiliary services; the device, such as a tiltrotator, configured to move (e.g. rotate) the work implement 46 relative to the dipper 32; the trailer auxiliary service; and the trailer tip service. Each rotary digit-operated switch 105 may also only control such controllable elements.

Each pushbutton digit-operated switch 105 may control other parts of the working machine 10, such as its interior/exterior lights, or a horn/siren, for example.

In the illustrated embodiment, the foot pedal 110 is configured to send a control input signal to the controller 202 for controlling the controllable element assigned thereto. The control signal that the foot pedal 110 sends to the controller 202 varies in response to a displacement of the foot pedal 110 from a rest position of the foot pedal 110. The foot pedal 110 is in its rest position in Figure 2.

In the illustrated embodiment, the foot pedal 110 is pivotable about a horizontal axis X5 thereof in a first direction D1 between its rest position and a first maximum pivot position. The first direction D1 corresponds to a toe end 110a of the foot pedal 110 being moved downwards towards the floor 23 of the operator station 22, and a heel end 110b of the foot pedal 110 being moved upwards away from the floor 23. The first maximum pivot position of the foot pedal 110 may correspond to the toe end 110a contacting the floor 23 or a stop mounted to the floor 23.

In the illustrated embodiments, the foot pedal 110 is a bi-directional foot pedal. The foot pedal 110 is further pivotable about the axis X5 in a second direction D2, opposite to the first direction D1, between the rest position and a second maximum pivot position. The second direction D2 corresponds to the heel end 110b of the foot pedal 110 moving towards the floor 23, and the toe end 110a moving away from the floor 23. The control signal received from the foot pedal 110 is similarly configured to vary as the foot pedal 110 is pivoted about its axis X5 between its rest position and the second maximum pivot position. The second maximum pivot position of the foot pedal 110 may correspond to the heel end 110b contacting the floor 23 or a stop mounted to the floor 23.

The foot pedal 110 may control an assignable controllable element having two control outputs. For example, each of the first to eighth actuators 26a-h has two control outputs (e.g. rate of extension and rate of retraction). Pivoting the foot pedal 110 in the first direction D1 may control one of the control outputs (e.g. extension) and pivoting the foot pedal 110 in the second direction D2 may control the other one of the control outputs (e.g. retraction).

The controller 202 may be configured to control the assigned controllable element based on the control signal received from the foot pedal 110, such that the control output of the assigned controllable element is proportional to the displacement of the foot pedal 110 away from its rest position. The output may be directly (linearly) proportional to the displacement.

For example, when one of the actuators 26a-26h is assigned to the foot pedal 110, the controller 202 may be configured to control a rate of extension or retraction of the actuator 26a-26h (i.e. the control output of the actuator 26a-26h) in proportion to the displacement of the foot pedal 110 away from its rest position, such that the larger the displacement, the higher the rate of extension or retraction. The rate of extension or retraction may be zero when the foot pedal 110 is in its rest position.

In alternative embodiments, the control output of the assigned controllable element may vary nonlinearly (e.g. exponentially) with respect to the displacement of the foot pedal 110 away from its rest position.

The controller 202 may be configured to vary a mapping between each control output (e.g. extension and retraction) of the selected assignable controllable element and a position of the foot pedal 110 relative to its rest position. The controller 202 may be configured to vary said mapping based on an input received from the input device arrangement 112.

For example, the controller 202 may be configured to vary the control output of the selected assignable controllable element corresponding to the first and/or second maximum pivot position of the foot pedal 110, based on an input received from the input device arrangement 112. Advantageously, such a configuration enables the sensitivity of the control output of the assignable controllable element to the operation of the foot pedal 110 to be varied according to the operator's preference.

The proportionality may not occur across the full range of motion. In some embodiments, the control system 200 may be configured to implement a deadband (also known as a dead zone or neutral zone) centred at the rest position of the foot pedal 110, such that the control output of the assigned controllable element is zero for a range of foot pedal positions centred at the rest position. Outside of the deadband, the control output of the assigned controllable element may be proportional to the displacement of the foot pedal 110 away from its rest position.

In some embodiments, the controller 202 may be configured to select any two of the assignable controllable elements for simultaneous control by the foot pedal 110 based on a selection input received from the input device arrangement 112. The controller 202 may be configured to control a first of the selected assignable controllable elements based on a first control signal received from the foot pedal 11, and simultaneously control a second of the selected assignable controllable elements based on a second control signal received from the foot pedal 110. Advantageously, such configuration enables the foot pedal 110 to control more than one component of the working machine 10.

In some embodiments, the foot pedal 110 may be configured to translate along its axis X5. Additionally or alternatively, the foot pedal 110 may be configured to pivot about, and/or translate along, a further axis X6 thereof which may be perpendicular to the horizontal axis X5. For example, the axis X6 may be a substantially vertical axis as shown in Figure 2. Movement of the foot pedal 110 about or along the axis X5 may control the first of the two selected assignable controllable elements, and movement of the foot pedal 110 about or along the axis X6 may control the second of the two assignable controllable elements.

With reference to Figure 3, the control system 200 includes a storage device 206 for storing data, such as a hard drive or flash memory. The control system 200 is configured such that the controller 202 can both read data from and write data to the storage device 206.

It will be appreciated that more than one operator may operate the working machine 10 within a working day or week for example. Each time a different operator comes to operate the working machine 10 a substantial amount of time may be needed for the operator to configure the working machine's controls to their liking.

To address this problem, the controller 202 may be configured to store data corresponding to the assignable controllable elements selected for control by the configurable control input devices 100 by the operator and a linked operator identifier in the storage device 206. The operator identifier may include any data identifying the operator such as their name or a unique ID number for example. The controller 202 may be configured to retrieve the data corresponding to the selected assignable controllable element) from the storage device 206 based on an input received on the input device arrangement 112 corresponding to the operator identifier. Advantageously, such a configuration enables the preferences of different operators to be stored and retrieved, so as to minimise the time needed for each operator to configure the configurable control input devices 100 to their preference whenever they come to operate the working machine 10.

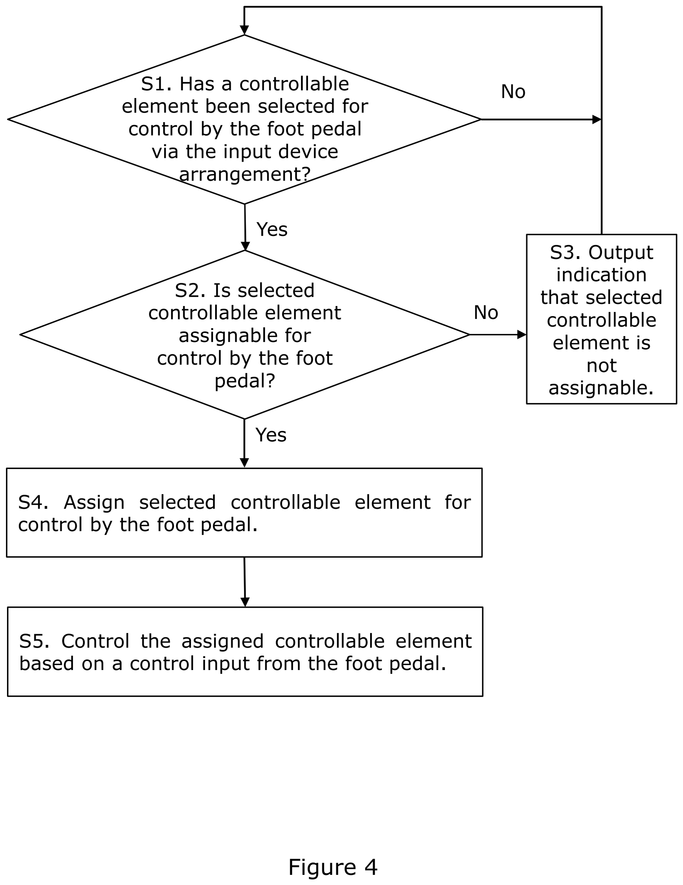

In the following, a method for operating the working machine 10 will be described with reference to Figure 4.

In step S1 of the method, the controller 202 monitors for selection by an operator of the controllable elements of the working machine 10 for control by the foot pedal 110 via the input device arrangement 112.

In step S2, the controller 202 determines whether the selected controllable element is assignable for control by the foot pedal 110. If the selected controllable element is not assignable ('No'), the method proceeds to step S3. Otherwise, the method proceeds to step S4.

In step S3, the controller 202 signals an indication that the selected controllable element is not assignable to the foot pedal 110 via the display device 115 (e.g. a message on the display device). Subsequently, the method returns to step S1. In some embodiments, the controller may not display such an indication.

In step S4, once the controller 202 determines that the selected controllable element is assignable to the foot pedal 110, the controller 202 assigns the selected controllable element for control by the foot pedal 110.

In subsequent step S5, the controller 202 controls the assigned controllable element based on the control input received from the foot pedal 110, as outlined above.

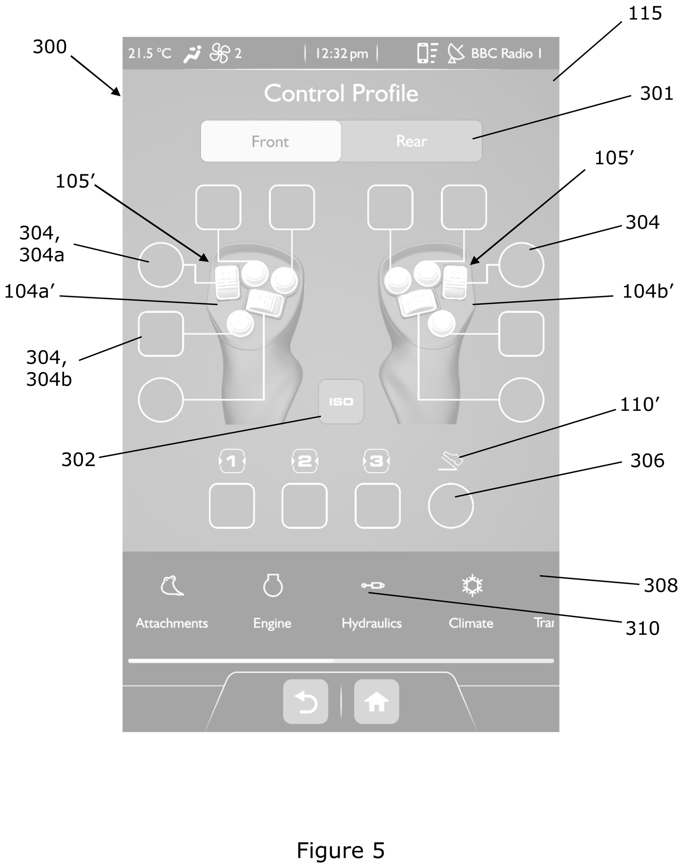

Regarding steps S1 to S5, in the illustrated embodiment, the assignable controllable elements are assigned to the configurable control input devices 100 via interaction with the touch screen device 114 in the operator station 22. Figure 5 shows a screenshot of an exemplary control profile 300 displayed on the display 115 of the touch screen device 114. The control profile 300 indicates the assignable controllable elements currently controlled via each configurable control input device 100.

The control profile 300 includes a user interface including a plurality of selectable user interface elements including symbols and icons.

In the illustrated embodiment, the control profile 300 shows graphical representations of front (i.e. operator-facing) portions of the left and right joysticks 104a' and 104b' and the digit-operated switches 105' mounted thereto, where ' is used to denote a graphical representation of the physical control. The controller 202 is configured to display graphical representations of rear portions of the joysticks 104a and 104b and the digit-operated switches 105 mounted thereto via selection of a "rear" icon 301. The control profile 300 also shows a graphical representation of the foot pedal 110'.

The control profile 300 includes a joystick pattern icon 302, which indicates the control pattern currently assigned to the joysticks 104a, 104b. In Figure 5, an ISO control pattern has been assigned. The operator can toggle through different joystick control patterns by selecting the joystick pattern icon 302.

The control profile 300 includes a symbol 304 associated with each digit-operated switch 105'. In the illustrated embodiment, each symbol 304 is connected to its associated digit-operated switch 105' via a line. It should be understood that the symbols 304 may be displayed in another arrangement in other examples. For example, the symbols 304 may be overlaid on top of the associated digit-operated switch 105'.

The control profile 300 includes a symbol 306 associated with the foot pedal 110'. In the illustrated embodiment, the symbol 306 is positioned adjacent to a graphical representation of the foot pedal 110'.

Each symbol 304, 306 indicates the controllable element currently assigned to the associated digit-operated input device 105' or foot pedal 110'. In Figure 5, the symbols 304, 306 are blank since no controllable elements have been assigned.

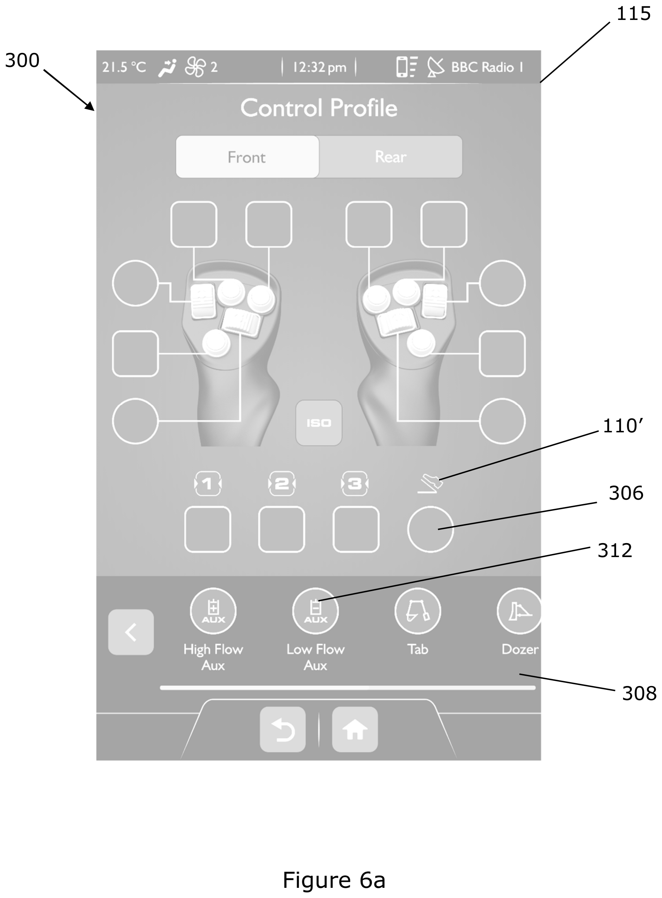

The control profile 300 includes a menu 308 including controllable elements that are assignable to the digit-operated switches 105' and the foot pedal 110'. The menu 308 may be displayed simultaneously with the symbols 304, 306 associated with the digit-operated switches and the foot pedal 110. Figure 5 shows a first level of the menu 308 including icons 310 corresponding to categories of assignable controllable elements such as "attachments", "engine", "hydraulics" and "climate". Selecting any one of the icons 310 opens a second level of the menu 308 shown in Figure 6a, in which the icons 310 "hydraulics" has been selected via touching the corresponding icon 310 in Figure 5.

That is, selecting an icon 310 of the first menu level representing a category of assignable controllable elements may cause the user interface to display a second menu level including icons 312 corresponding to assignable controllable elements related to the selected icon 310 of the first menu level. It should be understood that in another example, the first level of the menu 308 may directly display one or more icons 312 corresponding to assignable controllable elements.

As shown in Figure 6a, once "hydraulics" has been selected, a number of icons 312 corresponding to assignable hydraulics-related controllable elements are displayed in the menu 308. In this example, these include 'high flow aux' (high flow auxiliary service), 'low flow aux' (low flow auxiliary service), 'Tab' (triple articulated boom), and 'dozer' (dozer blade 24). 'Tab' corresponds to control of the sixth actuator 26f for pivoting the second section 36 of the boom 30 relative to the first section 34. 'Dozer' corresponds to control of the second actuator 26b for raising and lowering the dozer blade 24. In the example of Figure 6a, the icons 312 corresponding to assignable controllable elements are grouped by association with a category of assignable controllable elements (in this case, "hydraulics"). However, it should be understood that the icons 312 corresponding to assignable controllable elements may be grouped and represented by first level menu icons 310 in other ways.

In the present embodiment, controllable elements can be assigned to each digit-operated input device 105 and the foot pedal 110 via an assigning process. In the following the assigning process will be described in relation to assigning a controllable element for control by the foot pedal 110, but may be similarly used to assign a controllable element for control by one of the digit-operated input devices 105.

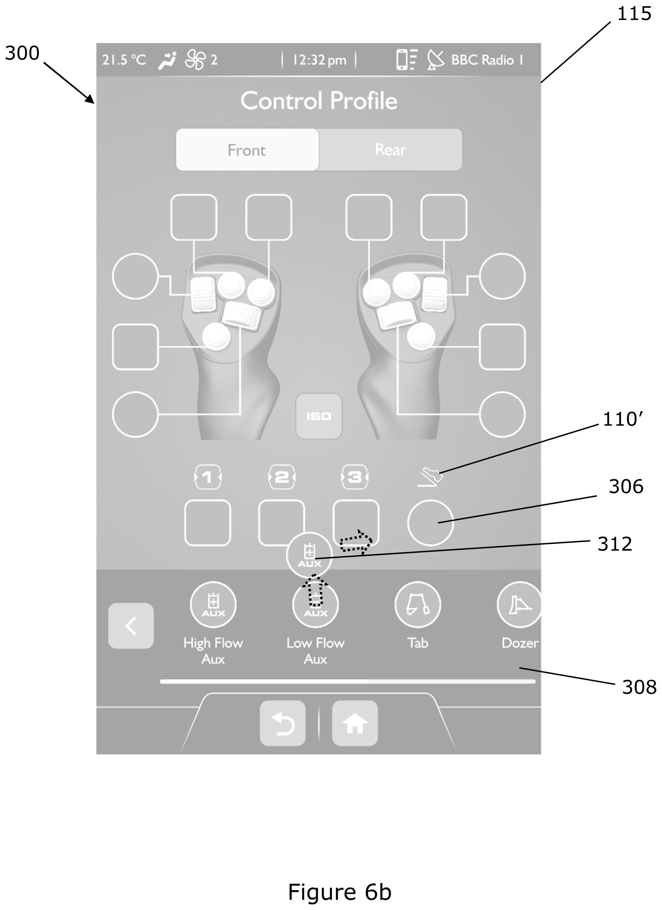

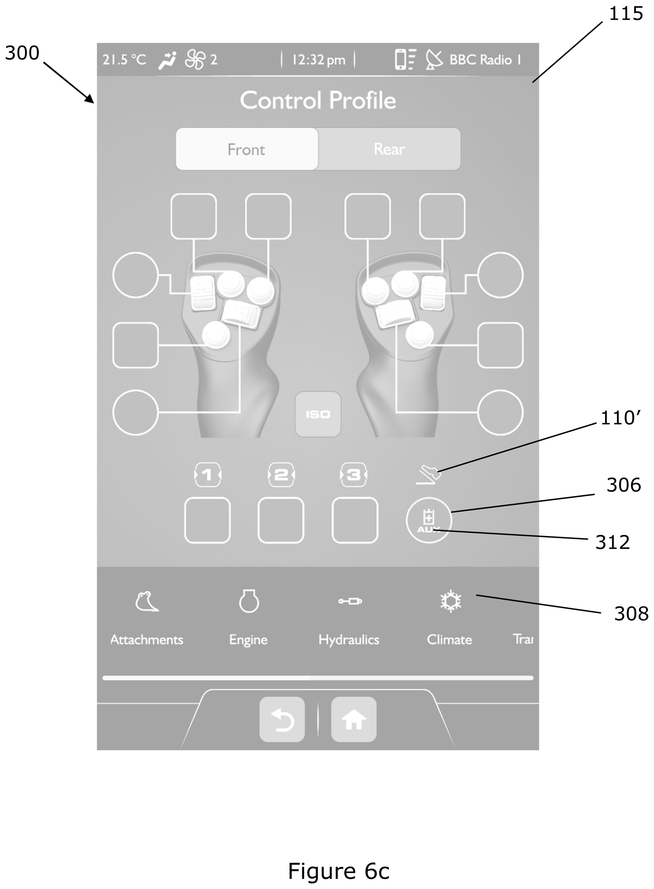

With further reference to Figures 6b and 6c, in the first selection process, the operator selects the icon 312 corresponding to the controllable element to be assigned to the foot pedal 110 via touching the icon 312, then "drags" the icon 312 from the menu 308, and then "drops" the icon 312 on the symbol 306 (i.e. via a drag and drop function). This drag and drop movement of the icon 312 is indicated via arrows in Figure 6b. This allows the operator to choose which assignable controllable element they want to assign to the foot pedal 110 quickly and easily. In some embodiments, the icon 312 may be dragged and dropped via an alternative input device of the input device arrangement 112, such as a mouse for example. In alternative embodiments (not shown), the assigned controllable element may be selectable via any suitable pointing device gesture.

Once the operator has dragged and dropped the icon 312 from the menu 308 to the symbol 306, as shown in Figure 6c, the controller 202 controls the selected controllable element based on the control input received from the foot pedal 110. The icon 312 corresponding to the controllable element assigned to the foot pedal 110 remains associated with (e.g. positioned within) the symbol 306 whilst that controllable element is assigned to the foot pedal 110, to enable the operator to quickly identify the assignment.

That is, once the operator assigns an assignable controllable element to the foot pedal 110 by dragging the associated icon 312, the operator may control the controllable element associated with the icon 312 via the foot pedal 110. The operator may thereby conveniently and easily change the function associated with the foot pedal 110, which as discussed above, enables the operator to operate a variety of functions of the working machine 10 with a reduced amount of physical user input devices. The operator may also quickly identify which function is associated with the foot pedal 110 at any given time by consulting the control profile 300. Thus, the operator receives continued guidance when operating the working machine 10 which assists them with operating the working machine 10.

Not all of the assignable controllable elements of the working machine 10 are suited for being controlled by the foot pedal 110. For example, the foot pedal 110 is primarily suited for controlling a continuous output controllable element, i.e. a controllable element which produces a control output which varies continuously in response to operation of the foot pedal 110, such as the rate of extension/retraction of the actuators 26a-h for example. Controllable elements having discrete control outputs, such as the lights of the working machine 10 being turned on or off for example, are less suited for control by the foot pedal 110. As such, the control system 200 may be configured to inhibit such discrete control output controllable elements from being selected and dragged and dropped on the symbol 306, so as to prevent them from being assigned to the foot pedal 110. Alternatively, the control system 200 may be configured to output an indication to the operator that discrete control output controllable elements should preferably be assigned to a different configurable control input device 100.

In the illustrated embodiment, the symbol 306 associated with the foot pedal 110' and some of the symbols 304a associated with the digit-operated switches 105' are illustrated by a first symbol type, exemplified in Figures 5-7 as a circle. This indicates that the associated digit-operated switch 105' or foot pedal 110' is only assignable to control a continuous output controllable element.

The rest of the symbols 304b are illustrated by a second symbol type, exemplified in Figures 5-7 as squares, to indicate that the associated digit-operated switch 105' is only assignable to control a discrete output controllable element. Similarly, the icons 312 in the menu 308 are either circle or square shaped, to indicate whether the corresponding controllable element has a continuous or discrete control output. The operator can only assign a circle or square shaped icon 312 to a circle or square shaped symbol 304, 306 respectively so as to inhibit assignment of a controllable element to an unsuited control input device 100. In alternative embodiments, the first and second symbol types may have any suitable representation.

In alternative embodiments (not shown), one or more discrete output controllable elements may be assignable to the foot pedal 110' for control thereby. For example, pivoting of the pedal 110 in the first direction D1 may correspond to a first discrete output of such a controllable element, and pivoting the pedal 110 in the second direction D2 may correspond to a second discrete output.

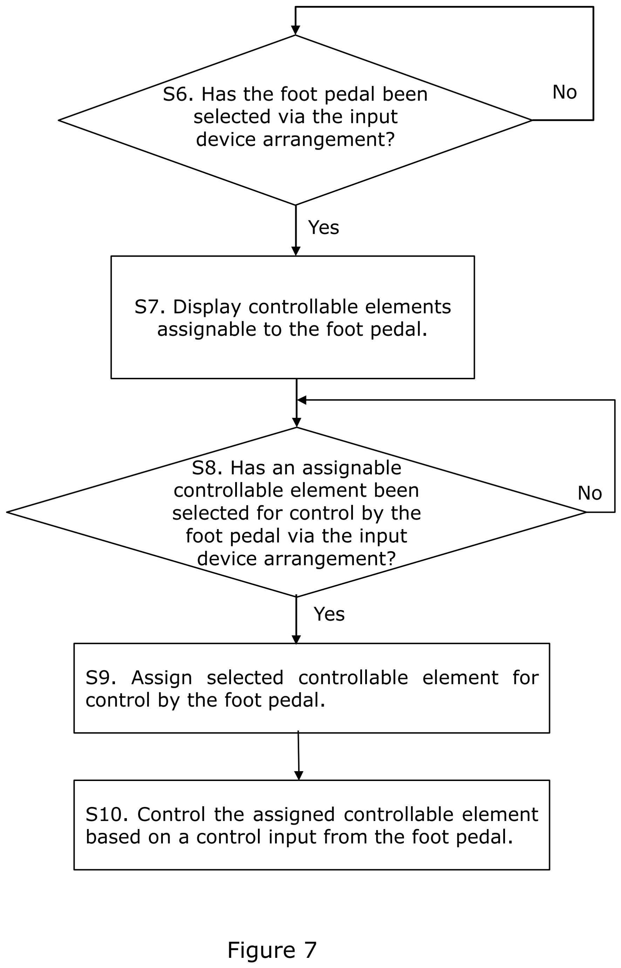

Figure 7 shows a method for operating the working machine 10 including an alternative assigning process. In the following, this assigning process will be described in relation to assigning a controllable element for control by the foot pedal 110, but may be similarly used for an alternative control input device 100.

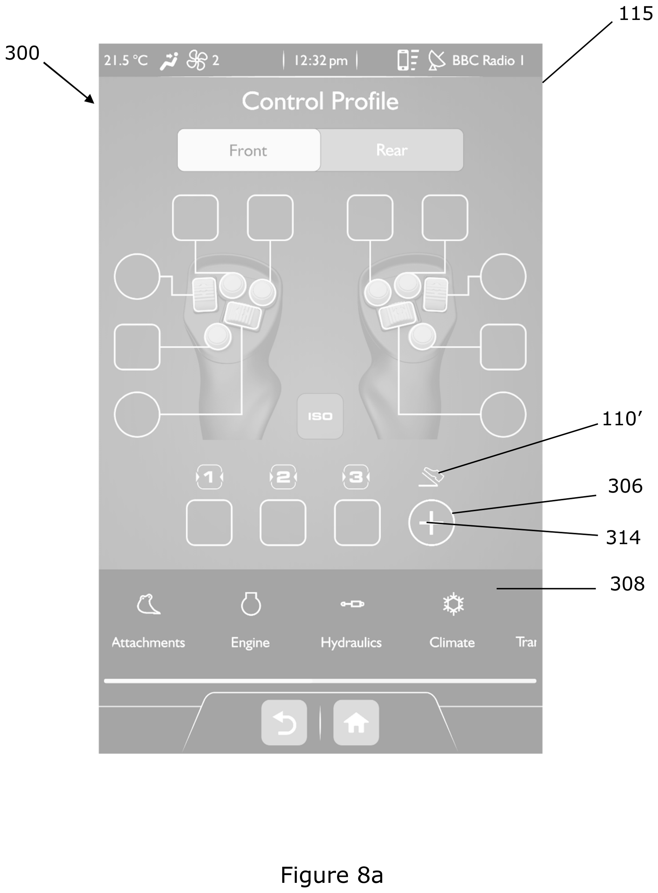

In step S6 of this method, the controller 202 monitors for selection by an operator of the foot pedal 110 via the input device arrangement 112. That is, instead of dragging and dropping an icon 312 on the symbol 306, the operator instead first selects the symbol 306 (e.g. via touching it). Selecting the symbol 306 displays an icon 314 that is associated with (e.g. positioned within) the symbol 306, as shown in Figure 8a. In the illustrated embodiment, the icon 314 is a plus sign. The icon 314 is intended to indicate that an assignable controllable element can be assigned to the foot pedal 110 via selecting the icon 314.

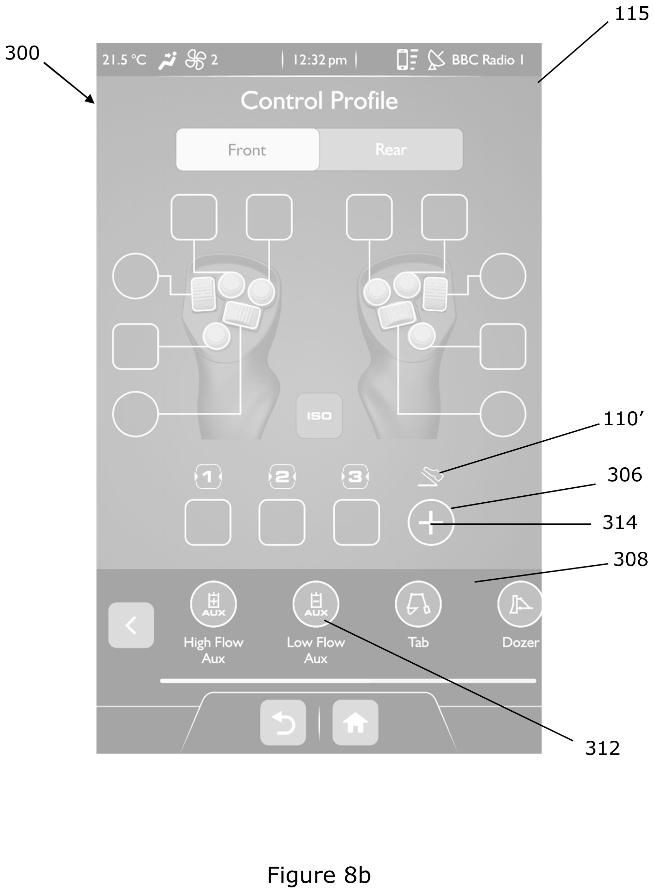

In step S7, once the operator selects the icon 314, all or a portion of the assignable controllable elements that are assignable to the foot pedal 110 are displayed as icons 312 in the menu 308 as shown in Figure 8b.

In step S8, the controller 202 monitors for selection by an operator of the assignable controllable elements of the working machine 10 for control by the foot pedal 110 via the input device arrangement 112. In the illustrated embodiment, the operator selects one of the icons 312 in the menu 308 to assign the corresponding assignable controllable element to the foot pedal 110.

Steps S9 and S10 are identical to steps S4 and S5 of the method of Figure 4 described above.

Advantageously, in the method of Figure 7, only assignable controllable elements that are assignable to the foot pedal 110 are displayed as icons 312 in the menu 308. Thus, the operator may easily and quickly identify assignable controllable elements to assign to the foot pedal 110. The omission of assignable controllable elements that are not assignable to the foot pedal 110 reduces distraction of the operator and enables the operator to more easily assign an appropriate assignable controllable element to the foot pedal 110.

The one or more embodiments are described above by way of example only and it will be appreciated that the variations are possible without departing from the scope of protection afforded by the appended claims.

## Claims

1. A working machine, comprising:
a ground-engaging propulsion arrangement;
a body mounted to the ground-engaging propulsion arrangement, the body comprising an operator station;
a plurality of assignable controllable elements;
a configurable foot pedal in the operator station for controlling a selected one of the assignable controllable elements;
an input device arrangement; and
a controller in communication with the configurable foot pedal and the input device arrangement, the controller configured to:
receive a selection input from the input device arrangement;
assign any one of the assignable controllable elements for control by the configurable foot pedal based on the selection input received from the input device arrangement;
receive a control input from the configurable foot pedal; and
control the assigned controllable element based on the control input received from the configurable foot pedal.

2. The working machine of claim 1, wherein the working machine comprises a display device in the operator station in communication with the controller, wherein the display device is configured to display an output from the controller indicative of the assignable controllable elements assignable to the configurable foot pedal;
optionally wherein the display device is configured to display an output from the controller based on the selection input received from the input device arrangement;
optionally wherein the input device arrangement comprises a touchscreen device comprising the display device;
optionally wherein the working machine is configured such that the controllable element assigned for control by the configurable foot pedal is selectable via a pointing device gesture, such as a drag and drop function, displayed on the display device.

3. The working machine of claim 1 or claim 2, wherein the input device arrangement is in the operator station; and/or wherein the input device arrangement comprises one or more of: a touchscreen device; a switch, e.g. a rotary switch or dial; a button; a mouse; and a joystick.

4. The working machine of any preceding claim, wherein each of the assignable controllable elements is controllable by the configurable foot pedal to produce a continuous control output; optionally, wherein the controller is configured to inhibit any discrete output controllable element of the working machine being selected for control by the configurable foot pedal;
optionally wherein the controller is configured such that the control output of the assigned controllable element is proportional to a displacement of the configurable foot pedal from a rest position of the configurable foot pedal.

5. The working machine of any preceding claim, wherein the assignable controllable elements include one or more actuators (e.g. hydraulic actuators);
optionally wherein the working machine further comprises a working arm pivotally mounted to the body, wherein one or more of the assignable controllable elements are configured to control movement of: the working arm; a work implement mounted to the working arm; and/or a device configured to move a work implement relative to the working arm; and
optionally wherein the working arm comprises a triple articulated boom comprising a first boom section pivotally mounted to the body, a second boom section pivotally mounted to the first boom section, and a third boom section pivotally mounted to the second boom section, wherein one or more of the assignable controllable elements are configured to control pivoting of the first, second and/or third boom sections relative to the machine body, first boom section and second boom section respectively.

6. The working machine of claim 5, further comprising a working arm pivotally mounted to the body, and a work implement mounted to an end of the working arm, wherein the work implement comprises two or more relatively movable parts, and wherein at least one of the assignable controllable elements is configured to control relative movement of said parts, e.g. wherein the work implement is a grab, a hammer, or a rotary planer drum or brush and/or, wherein one or more of the assignable controllable elements are configured to control: movement of a dozer blade relative to the body; movement of a stabiliser leg relative to the body; an actuatable tow hitch relative to the body; a trailer auxiliary service and/or a trailer tip service.

7. The working machine of any preceding claim, wherein the plurality of assignable controllable elements includes three or more, optionally, four or more, e.g. five or more, controllable elements.

8. The working machine of any preceding claim, wherein the control input received from the configurable foot pedal corresponds to a displacement of the configurable foot pedal from a rest position thereof, and wherein the controller is configured to vary a mapping between a control output of the selected controllable element and the position of the configurable foot pedal relative to its rest position based on an input received from the input device arrangement; optionally, wherein the configurable foot pedal is pivotable about an axis thereof in a first direction between the rest position and a first maximum pivot position, wherein the controller is configured such that the control output of the selected controllable element is proportional to the displacement of the configurable foot pedal from its rest position, and wherein the controller is configured to vary the control output of the selected controllable element corresponding to the first maximum pivot position of the configurable foot pedal based on an input received from the input device arrangement; optionally, wherein the configurable foot pedal is a bi-directional foot pedal, wherein the configurable foot pedal is pivotable about the axis thereof in a second direction opposite to the first direction between the rest position and a second maximum pivot position, and wherein the controller is configured to vary the control output of the selected controllable element corresponding to the second maximum pivot position of the configurable foot pedal based on an input received from the input device arrangement.

9. The working machine of any preceding claim, wherein the configurable foot pedal is a bi-directional foot pedal.

10. The working machine of any preceding claim, further comprising a steering wheel mounted to a steering pedestal in the operator station, and wherein the configurable foot pedal is adjacent the steering pedestal.

11. The working machine of any preceding claim, further comprising a prime mover speed control pedal (e.g. a throttle pedal) and/or a brake pedal in the operator station, separate to the configurable foot pedal; optionally, wherein the operator station includes no foot pedals other than the configurable foot pedal, and the prime mover speed control pedal and/or brake pedal; and
optionally wherein the working machine is an excavator, e.g. a wheeled excavator.

12. The working machine of any preceding claim, comprising a plurality of control input devices including the configurable foot pedal, wherein the controller is configured such that at least one of the assignable controllable elements is assignable to each control input device for control thereby based on a selection input received from the input device arrangement;
optionally wherein the plurality of control input devices comprises one or more hand-operated control input devices in the operator station; optionally wherein the controller is configured such that at least one of the assignable controllable elements is selectively assignable to the configurable foot pedal and at least one hand operated control input device; optionally, wherein the one or more hand-operated control input devices comprise a joystick and/or a switch (e.g. mounted to a joystick).

13. The working machine of any preceding claim, wherein the controller is configured to:
assign any two of the assignable controllable elements for simultaneous control by the configurable foot pedal based on a selection input received from the input device arrangement;
control a first of the two assigned controllable elements based on a first control input received from the configurable foot pedal; and
simultaneously control a second of the two assigned controllable elements based on a second control input received from the configurable foot pedal; optionally, wherein the configurable foot pedal is configured to move about or along first and second axes thereof to generate the first and second control inputs respectively.

14. The working machine of any preceding claim, further comprising a storage device, wherein the controller is configured to store data corresponding to the assigned controllable element and a linked operator identifier in the storage device, and wherein the controller is configured to retrieve the data corresponding to the assigned controllable element from the storage device based on an input received from the input device arrangement corresponding to the operator identifier.

15. A method for operating a working machine, the working machine comprising:
a ground-engaging propulsion arrangement;
a body mounted to the ground-engaging propulsion arrangement, the body comprising an operator station;
a plurality of assignable controllable elements;
a configurable foot pedal in the operator station for controlling a selected one of the assignable controllable elements; and
an input device arrangement;
the method comprising:
assigning any one of the assignable controllable elements for control by the configurable foot pedal based on a selection input received from the input device arrangement; and
controlling the assigned controllable element based on a control input received from the configurable foot pedal;
optionally, wherein the controllable element assigned for control by the configurable foot pedal is selected via a pointing device gesture, such as a drag and drop function, displayed on a display device, e.g. in the operator station.
